# EUROPÄISCHE PATENTANMELDUNG

(11) **EP 2 131 280 A2**
(43) Veröffentlichungstag der Anmeldung: **09.12.2009**
(21) Anmeldenummer: 09005940.3
(22) Anmeldetag: 29.04.2009
(51) Int. Cl.: G06F 9/50, G06F 9/46

(54) **Verwalten von Instanzen einer virtuellen Maschine in einem tragbaren Datenträger**

(30) Priorität: 04.06.2008 DE 102008026785
(71) Anmelder: Giesecke & Devrient GmbH, 81677 München (DE)
(72) Erfinder: Stocker, Thomas, 81739 München (DE)

(57) **Zusammenfassung**

Bei einem Verfahren zum Verwalten von mindestens zwei Instanzen (34,36) einer virtuellen Maschine in einem tragbaren Datenträger (10) wird für beide Instanzen (34, 36) der virtuellen Maschine ein einziger nativer Stapelspeicher (38) verwendet. Das Verfahren umfasst das Aufrufen und Ausführen einer ersten Instanz (34), das Versetzen der ersten Instanz (34) in einen Wartezustand, das Aufrufen und Ausführen einer zweien Instanz (36), das Versetzen der zweiten Instanz (36) in einen Wartezustand, und die Rückkehr zum Ausführen der ersten Instanz (34) mit demjenigen Inhalt des nativen Stapelspeichers (38), der zum Zeitpunkt des Versetzens der ersten Instanz (34) in den Wartezustand bestand. Die Erfindung verringert den Speicherplatzbedarf beim Ausführen der beiden Instanzen (34, 36) in dem Datenträger (10).

## Beschreibung

Die Erfindung betrifft allgemein das technische Gebiet der Ausführung von virtuellen Maschinen in tragbaren Datenträgern. Genauer betrifft die Erfindung die Verwaltung von mindestens zwei Instanzen einer virtuellen Maschine in einem tragbaren Datenträger. Ein tragbarer Datenträger in der Wortwahl des vorliegenden Dokuments kann beispielsweise die Bauform einer Chipkarte oder eines kompakten Chipmoduls aufweisen.

Die Leistungsfähigkeit von tragbaren Datenträger ist in den letzten Jahren immer weiter gewachsen. Dementsprechend haben auch die Funktionen zugenommen, die von einem tragbaren Datenträger ausgeführt werden können. So zeigt beispielsweise das US-Patent 6,439,464 eine Chipkarte, die in einem ersten Betriebsmodus gemäß dem Protokoll ISO/IEC 7816 und in einem zweiten Betriebsmodus gemäß einem USB-Protokoll (USB = *Universal Serial Bus*) arbeitet. Ein einmal eingestellter Betriebsmodus wird bis zum nächsten Hochfahren der Chipkarte beibehalten.

In einem zumindest internen Projekt der Anmelderin ist ein tragbarer Datenträger entwickelt worden, neben einer Funktion als (U)SIM-Karte für ein Mobiltelefon (SIM = *Subscriber Identity Module*, USIM = *Universal Subscriber Identity Module*) ferner eine USB-Schnittstelle bereitstellt. Die USB-Schnittstelle kann beispielsweise zum Zugriff auf einen in den Datenträger integrierten Web-Server verwendet werden, wobei der Datenträger ferner von dem Web-Server aufgerufene Anwendungen (*Servlets*) ausführt. Im Gegensatz zu der aus dem US-Patent 6,439,464 bekannten Chipkarte stehen hier die Funktionen der (U)SIM-Karte und der USB-Schnittstelle nebeneinander in einem einzigen Betriebsmodus des Datenträgers zur Verfügung.

Es ist bekannt, bei einem tragbaren Datenträger eine virtuelle Maschine vorzusehen, die beispielsweise als JCVM (*Java Card Virtual Machine =* virtuelle Java-Card-Maschine) ausgestaltet sein kann. Eine solche JCVM vermag Programme im Java-Bytecode auszuführen, die beispielsweise ein (U)SIM-Basissystem oder einen (U)SIM-Toolkit bilden. Wenn der Datenträger jedoch - wie oben erwähnt - zusätzlich eine weitere Schnittstelle bedienen soll, besteht das Problem, sowohl die (U)SIM-Funktionen als auch die Funktionen zur Bedienung der weiteren Schnittstelle mit hinreichend schnellen Antwortzeiten - vorzugsweise quasi-parallel - bereitzustellen.

In der internen Entwicklungsarbeit der Anmelderin wurde eine Ausgestaltung eines Datenträgers erwogen, bei der zwei Instanzen einer virtuellen Maschine in zwei voneinander unabhängigen nativen Programmausführungssträngen (*Threads*) ausgeführt werden. Die beiden Instanzen greifen auf getrennte Speicherbereiche - insbesondere getrennte native Stapelspeicher (*Stacks*) *-* zu. Bei diesem Ansatz besteht jedoch das Problem eines relativ großen Speicherbedarfs für den nativen Stapelspeicher, weil in jedem der beiden nativen Stapelspeicher genügend Platz für die komplette Aufrufhierarchie je einer der beiden Instanzen der virtuellen Maschine vorhanden sein muss. Insbesondere in Ausgestaltungen, bei denen sich der native Stapelspeicher im knappen RAM des Datenträgers befindet, ist dieses Problem von beträchtlicher Bedeutung. Eine Lösung wäre wünschenswert, die bei im wesentlicher gleicher Funktionalität weniger Speicherplatz für den nativen Stapelspeicher benötigt.

Das europäische Patent EP 1314135 B1 offenbart ein Verfahren zur virtuellen Vergrößerung eines Stapelspeichers eines tragbaren Datenträgers. Hierbei wird der im RAM befindliche Stapelspeicher in Segmente unterteilt. Bei zunehmendem Füllungsgrad des Stapelspeichers werden Segmente des Stapelspeichers in einen anderen Speicher des Datenträgers - beispielsweise ein EEPROM - ausgelagert.

Das europäische Patent EP 1611510 B1 offenbart ein Verfahren, bei dem zwei virtuelle Maschinen auf einem tragbaren Datenträger ein und dasselbe Programm ausführen. Die Programmausführung wird auf Abweichungen zwischen den beiden virtuellen Maschinen überwacht, um Störungen oder Angriffe zu erkennen.

Die Erfindung hat die Aufgabe, die oben genannten Probleme zumindest zum Teil zu lösen. Insbesondere soll durch die Erfindung der Speicherplatzbedarf beim Ausführen von mindestens zwei Instanzen einer virtuellen Maschine in einem tragbaren Datenträger verringert werden.

Erfindungsgemäß wird diese Aufgabe durch ein Verfahren mit den Merkmalen des Anspruchs 1, ein Computerprogrammprodukt gemäß Anspruch 14 und einen tragbaren Datenträger gemäß Anspruch 15 gelöst. Die abhängigen Ansprüche betreffen optionale Merkmale einiger Ausgestaltungen der Erfindung.

Die Erfindung geht von der Grundidee aus, für die beiden Instanzen der virtuellen Maschine einen einzigen nativen Stapelspeicher zu verwenden. Dies verringert den benötigten Speicherplatz erheblich, weil sich in dem gemeinsam genutzten nativen Stapelspeicher die beiden längsten benötigten Aufrufpfade überlappen können. Im Gegensatz dazu wäre bei einer Verwendung von zwei getrennten nativen Stapelspeichern Speicherplatz für zumindest die Summe der beiden nativen Aufrufpfade erforderlich. Insbesondere in Ausgestaltungen, bei denen der native Stapelspeicher im knappen RAM angelegt ist, stellt dies einen bedeutenden Vorteil dar.

Erfindungsgemäß befindet sich die erste Instanz in einem Wartezustand, während die zweite Instanz ausgeführt wird. Bei einer Rückkehr zur ersten Instanz wird dann die zweite Instanz in einen Wartezustand versetzt, wobei der für eine spätere Rückkehr zum Ausführen der zweiten Instanz erforderliche Kontext der zweiten Instanz gesichert wird. Die Rückkehr zum Ausführen der ersten Instanz erfolgt dann mit demjenigen Inhalt des nativen Stapelspeichers, der zum Zeitpunkt des Versetzens der ersten Instanz in den Wartezustand bestand. Wenn in manchen Ausführungsformen zu einem späteren Zeitpunkt eine Rückkehr zum Ausführen der zweiten Instanz erfolgt, wird hierbei der gesicherte Kontext wiederhergestellt.

In manchen Ausgestaltungen der Erfindung wird vor der Rückkehr zur ersten Instanz eine gegebenenfalls gerade laufende Abarbeitung eines in der zweiten Instanz interpretierten Befehls bis zum Ende der Bearbeitung dieses Befehls fortgesetzt. Dies hat vorzugsweise zur Folge, dass Einträge im nativen Stapelspeicher, die von der zweiten Instanz angelegt wurden, vor der Rückkehr zur ersten Instanz ohne weiteres abgebaut oder verworfen werden können.

In manchen Ausführungsformen weist der Datenträger eine erste und eine zweite Schnittstelle auf, die beispielsweise als Schnittstelle gemäß ISO/IEC 7816 bzw. als USB-Schnittstelle ausgestaltet sein können. Die beiden Instanzen können den beiden Schnittstellen zugeordnet sein und beispielsweise die Funktionen eines (U)SIM bzw. eines Web-Servers bereitstellen.

In den Ausführungsbeispielen des vorliegenden Dokuments werden hauptsächlich Datenträger nach dem *Java*-*Card*-Standard beschrieben. Die Erfindung ist jedoch auch zur Verwendung bei anderen Datenträgern geeignet, die ähnliche Strukturen aufweisen. Dies können beispielsweise Datenträger nach dem .NET-Standard sein.

Das erfindungsgemäße Computerprogrammprodukt kann als körperliches Medium - z.B. als Diskette oder CD-ROM oder Halbleiterspeicher - oder als nicht-körperliches Medium - z.B. als über ein Computernetzwerk übermitteltes Signal - ausgestaltet sein. Das Computerprogrammprodukt kann beispielsweise bei der Herstellung und/oder Komplettierung und/oder Initialisierung des tragbaren Datenträgers verwendet werden, wobei letzterer vorzugsweise als Chipkarte oder Chipmodul ausgestaltet ist.

Weitere Merkmale, Vorteile und Aufgaben der Erfindung gehen aus der folgenden genauen Beschreibung mehrerer Ausführungsbeispiele hervor. Es wird auf die schematischen Zeichnungen verwiesen, in denen zeigen:
Fig. 1 ein Blockdiagramm mit Funktionseinheiten eines tragbaren Datenträgers nach einem Ausführungsbeispiel der Erfindung, und
Fig. 2A und Fig. 2B einen beispielhaften Ablauf während des Betriebs des Datenträgers gemäß Fig. 1.

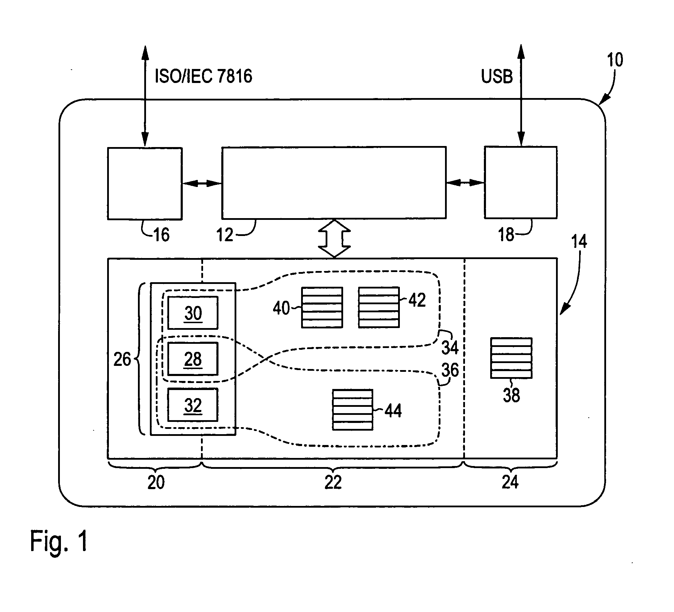

Der in Fig. 1 dargestellte tragbare Datenträger 10 ist als Chipkarte oder als Chipmodul - beispielsweise als SIM-Karte oder USIM-Karte für ein in den Zeichnungen nicht gezeigtes Telekommunikationsgerät - ausgestaltet. Der Datenträger 10 weist einen Prozessor 12, einen Speicher 14 und zwei Schnittstellen 16,18 auf. Beispielsweise kann die erste Schnittstelle 16 physikalisch und logisch gemäß der Norm ISO/IEC 7816 ausgestaltet sein, während die zweite Schnittstelle 18 eine USB-Schnittstelle ist.

Der Speicher 14 ist in mehrere Speicherfelder unterteilt. Im vorliegenden Ausführungsbeispiel sind als Speicherfelder ein als ROM ausgebildeter Festwertspeicher 20, ein als EEPROM ausgebildeter, nicht-flüchtiger überschreibbarer Speicher 22 und ein als RAM ausgebildeter Arbeitsspeicher 24 vorgesehen.

Diverse System- und Anwendungsprogramme 26 sind teils im Festwertspeicher 20 und teils im nicht-flüchtigen überschreibbaren Speicher 22 enthalten. Die Programme 26 umfassen unter anderem ein Betriebssystem (in Fig. 1 nicht gesondert gezeigt) sowie nativen Programmcode 28 und zwei Codepakete 30, 32. Der native Programmcode 28 ist zur nativen Ausführung durch den Prozessor 12 vorgesehen und implementiert eine virtuelle Maschine, die im vorliegenden Ausführungsbeispiel als JCVM (*Java Card Virtual Machine*) ausgestaltet ist. Das erste und das zweite Codepaket 30, 32 enthalten jeweils Java-Card-Bytecode zur Ausführung durch die JCVM, wie im folgenden genauer beschrieben wird.

Im Betrieb des Datenträgers 10 sind zumindest zeitweise zwei Instanzen 34, 36 der JCVM angelegt. Für beide Instanzen 34, 36 wird hierbei - gegebenenfalls mit geringfügigen Abweichungen - der native Programmcode 28 verwendet. Abgesehen davon sind jedoch die beiden Instanzen 34, 36 voneinander getrennt. Insbesondere führen die virtuellen Maschinen der beiden Instanzen 34, 36 unterschiedlichen Bytecode aus, und zwar die erste Instanz 34 den im ersten Codepaket 30 enthaltenen Bytecode und die zweite Instanz 36 den im zweiten Codepaket 32 enthaltenen Bytecode. Entsprechend unterscheiden sich auch die in den beiden Instanzen 34, 36 während der Betriebs vorliegenden Verwaltungs- und Nutzdaten, also z.B. Inhalte von Registern, lokalen Variablen und Datenfeldern sowie Stapelspeichern (*Stacks*). Fig. 1 zeigt beispielhaft durch eine gestrichelte bzw. eine strichpunktierte Linie die von den Instanzen 34, 36 belegten Bereiche im Speicher 14.

Die beiden Instanzen 34, 36 implementieren unterschiedliche Funktionen des Datenträgers 10. Beispielsweise kann die erste Instanz 34 über die erste Schnittstelle 16 die üblichen Funktionen eines (U)SIM bereitstellen, nämlich die Funktionen eines (U)SIM-Basissystems und eines (U)SAT (SAT = *SIM Application Toolkit,* USAT = *USIM Application Toolkit*). Das (U)SIM-Basis-system umfasst beispielsweise Authentisierungs- und Verschlüsselungsfunktionen sowie Speicherfunktionen für benutzerdefinierte Daten. Das (U)SAT ermöglicht die Ausführung von Erweiterungsprogrammen (*Applets*), die auf Funktionen des Telekommunikationsgeräts, mit dem der Datenträger 10 verbunden ist, zugreifen. Im hier beschriebenen Ausführungsbeispiel sind also sowohl das (U)SIM-Basissystem als auch der (U)SAT im ersten Codepaket 30 implementiert. In einer Ausführungsvariante ist dagegen nur der (U)SAT im ersten Codepaket 30 als Bytecode implementiert, während das (U)SIM-Basissystem ein natives Programm des Prozessors 12 ist.

Die zweite Instanz 36 stellt über die zweite Schnittstelle 18 Funktionen bereit, die sich über die erste Schnittstelle 16 nicht oder nur eingeschränkt implementieren lassen. Beispielsweise kann in manchen Ausgestaltungen die relativ hohe Datenübertragungsrate des USB-Standards genutzt werden, um Teile des nicht-flüchtigen überschreibbaren Speichers 22 als extern ansprechbarer Massenspeicher freizugeben. Alternativ oder zusätzlich weist der Datenträger 10 im hier beschriebenen Ausführungsbeispiel einen Web-Server auf, der eine Anzahl serverseitig ausgeführter Programme (*Servlets*) auszuführen vermag.

Der Web-Server empfängt HTTP-Anfragen (*Requests*), die über die zweite Schnittstelle 18 in Form von TCP/IP-Paketen eingehen, und gibt entsprechende HTTP-Antworten (*Responses*) wieder in Form von TCP/IP-Paketen über die zweite Schnittstelle 18 aus. Hierbei sorgt das Betriebssystem des Datenträgers 10 für die Verwaltung der zweiten Schnittstelle 18, wobei die Anfragen und Antworten in einem Puffer (in Fig. 1 nicht gesondert gezeigt) zwischengespeichert werden. Der Web-Server greift auf diesen Puffer zu. In manchen Ausgestaltungen werden sowohl der Web-Server als auch die *Servlets* durch den in der zweiten JCVM-Instanz 36 ausgeführten Bytecode des zweiten Codepakets 32 implementiert. In anderen Ausführungsformen ist dagegen der Web-Server ein natives Programm (in Fig. 1 nicht gesondert gezeigt), und nur die *Servlets* werden als Bytecode in der zweiten JCVM-Instanz 36 ausgeführt.

Es ist ein wichtiges Merkmal der hier beschriebenen Ausführungsformen, dass der Prozessor 12 bei der Ausführung der beiden Instanzen 34, 36 einen einzigen nativen Stapelspeicher (*Stack*) 38 verwendet, der hier beispielsweise im Arbeitsspeicher 24 angelegt ist. In an sich bekannter Weise werden in dem nativen Stapelspeicher 38 Rücksprungadressen und gegebenenfalls weitere zu sichernde Informationen - z.B. Registerwerte - abgelegt, die bei Unterprogrammaufrufen der von dem Prozessor 12 ausgeführten Maschinenprogramme - insbesondere des Betriebssystems des Datenträgers 10 und des nativen Programmcodes 28 - anfallen.

Auch die beiden JCVM-Instanzen 34, 36 unterhalten Stapelspeicher (*Stacks*) für Rücksprungadressen, lokale Variablen, Parameter und Berechnungsergebnisse. In Fig. 1 sind drei solche Stapelspeicher 40, 42, 44 gezeigt, die im nicht-flüchtigen überschreibbaren Speicher 22 des Datenträgers 10 angelegt sind. Der ersten beiden Stapelspeicher 40, 42 gehören zur ersten Instanz 34 der JCVM, wobei beispielsweise der erste Stapelspeicher 40 dem (U)SAT und der zweite Stapelspeicher 42 einem von dem (U)SAT ausgeführten Erweiterungsprogramm (*Applet*) zugeordnet ist. Eine solche Verwendung mehrerer Stapelspeicher 40, 42 in einer einzigen Instanz einer JCVM ist auf dem Gebiet der Implementierung von (U)SIMs an sich bekannt. Der dritte Stapelspeicher 44 gehört zur zweiten Instanz 36 der JCVM und ist beispielsweise dem Web-Server und/oder einem gerade ausgeführten *Servlet* zugeordnet.

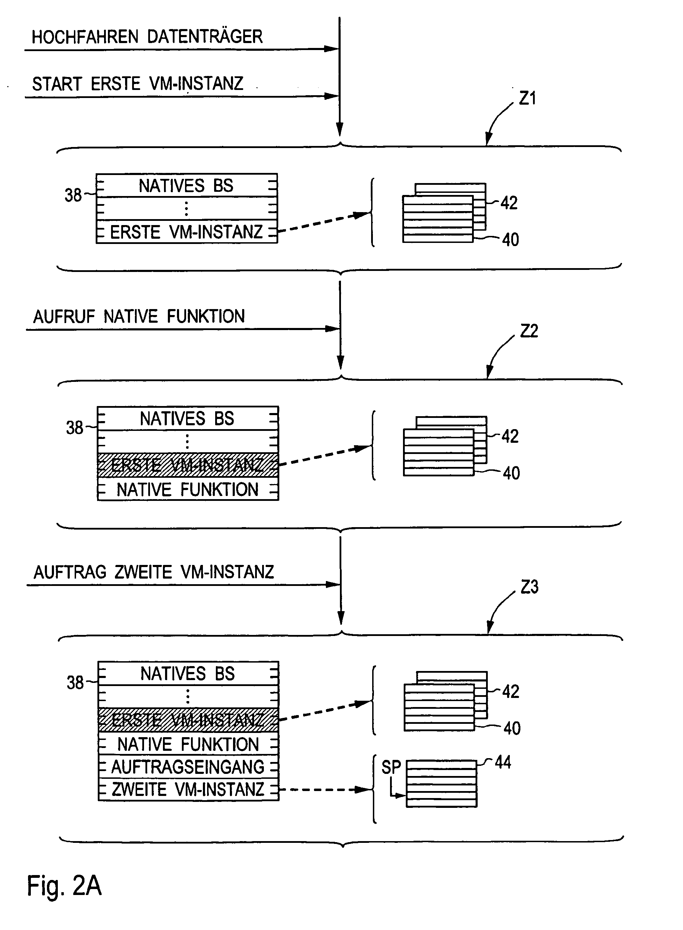

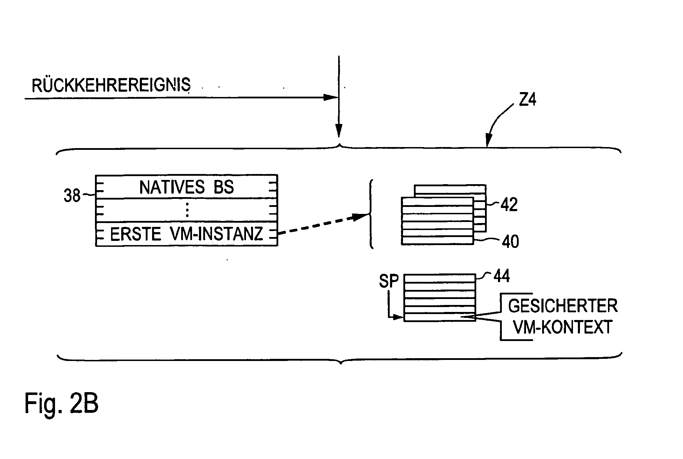

Fig. 2A und 2B zeigen in einem beispielhaftem Ablauf die Belegung des nativen Stapelspeichers 38 zu mehreren Zeitpunkten während des Betriebs des Datenträgers 10.

Beim Hochfahren des Datenträgers 10 wird zunächst das native Betriebssystem ausgeführt, dessen Einträge die ältesten Bereiche des nativen Stapelspeichers 38 - in den Zeichnungen oben gezeigt - belegen. Gegebenenfalls über weitere Zwischenstationen - in der Zeichnung durch drei Punkte angedeutet - wird dann die erste Instanz 34 der JCVM gestartet und ausgeführt. Somit ist der erste Zustand Z1 erreicht, in dem der Datenträger 10 alle (U)SIM-Funktionen einschließlich der Ausführung von *Applets* über die erste Schnittstelle 16 bereitstellt. Es versteht sich, dass in jeder hier beschriebenen Station potentiell mehrere Einträge im nativen Stapelspeicher 38 angelegt werden können. Dies ist in den Zeichnungen durch kurze Unterteilungsstriche am Rand des nativen Stapelspeichers 38 angedeutet.

Im hier beschriebenen Beispielsablauf wird nun von der ersten Instanz 34 eine native Funktion des Datenträgers 10 aufgerufen. Dies kann beispielsweise eine Betriebssystemfunktion sein, die auf den Eingang einer APDU (*Application Protocol Data Unit*) an der ersten Schnittstelle 16 wartet. Eine solche "Warte auf APDU"-Funktion wird beispielsweise ausgeführt, wenn ein (U)SAT-*Applet* eine Tastatureingabe des Benutzers benötigt. Der Aufruf der nativen Funktion versetzt die erste Instanz 34 in einen Wartezustand, weil so lange keine weiteren Bytecode-Instruktionen des ersten Codepakets 30 mehr ausgeführt werden, bis die native Funktion beendet ist. Dieser Wartezustand der ersten Instanz 34 ist in Fig. 2A durch eine Schraffur bezeichnet.

Während der gesamten Programmausführung auf dem Datenträger 10 fragt eine durch eine Unterbrechung (*Interrupt*) angestoßene Betriebssystemroutine in regelmäßigen Zeitabständen den der zweiten Schnittstelle 18 zugeordneten Puffer auf eingehende Datenpakete ab. Im hier beschriebenen Beispielsablauf geht nun an der zweiten Schnittstelle 18 ein TCP/IP-Paket ein, das eine Bearbeitung durch die zweite Instanz 36 der virtuellen Maschine erfordert. Ein solches Datenpaket kann beispielsweise einen Auftrag für ein *Servlet* enthalten. In Ausgestaltungen, bei denen der komplette Web-Server als Bytecode vorliegt und in der zweiten Instanz 36 ausgeführt wird, stellt jede HTTP-Anfrage einen Auftrag für den Web-Server und somit für die zweite JCVM-Instanz 36 dar.

Im hier beschriebenen Beispielsablauf wird nun die zweite Instanz 36 gestartet. Dies ist erforderlich, weil in der ersten Instanz 34 gerade die native Funktion (z.B. nativer C-Code) ausgeführt wird und daher keine einfache Rückkehr (z.B. mittels *Return*) in die erste Instanz 34 möglich ist. Fig. 2A zeigt als Zustand Z3 denjenigen Zustand, der nach dem Start der zweiten Instanz 36 erreicht ist.

Die zweite Instanz 36 führt nun Bytecode des zweiten Codepakets 32 aus, um den eingegangenen Auftrag zu bearbeiten, also z.B. das aufgerufene *Servlet* auszuführen. Hierbei benutzt die zweite Instanz 36 in an sich bekannter Weise den ihr zugeordneten Stapelspeicher 44. Ein Stapelzeiger SP verweist auf den jeweils aktuellen Eintrag, wobei der Stapelspeicher 44 in der Darstellung von Fig. 2A und 2B von oben nach unten wächst. Auch auf den gemeinsam genutzten nativen Stapelspeicher 38 greift die virtuelle Maschine bei der Ausführung der zweiten Instanz 36 zu, wobei sie natürlich allenfalls neue Einträge anlegt und keine bereits vor Aufruf der zweiten Instanz vorhandenen Einträge ändert oder löscht.

Im hier beschriebenen Beispielsablauf tritt nun ein Ereignis ein, aufgrund dessen es erforderlich oder wünschenswert ist, die Programmausführung durch die zweite Instanz 36 anzuhalten und zur ersten Instanz 34 zurückzukehren. Die zweite Instanz 36 wird hierbei in einen Wartezustand versetzt, während die erste Instanz 34 die Programmausführung fortsetzt. Ein solches Ereignis wird im folgenden als Rückkehrereignis bezeichnet. Beispielsweise kann es ein Rückkehrereignis sein, dass die zweite Instanz 36 auf den Eingang eines weiteren Datenpakets über die zweite Schnittstelle 18 oder auf eine Benutzereingabe wartet. Weitere Beispiele für Rückkehrereignisse sind das Überschreiten einer vorgegebenen Zeitgrenze für die Programmausführung in der zweiten Instanz 36 sowie der Eingang einer vorrangig zu bearbeitenden APDU für die erste Instanz 34 über die erste Schnittstelle 16.

Ein einfaches "Umschalten" zwischen den beiden Instanzen 34, 36 ist bei den hier beschriebenen Ausgestaltungen nicht möglich, weil beide Instanzen 34, 36 denselben nativen Stapelspeicher 38 nutzen. Wenn die erste Instanz 34 im Anschluss an die bisher von ihr angelegten Einträge im nativen Stapelspeicher 38 weitere Einträge anlegen würde, dann würden diese die Einträge der zweiten Instanz 36 überschreiben. Daher wird nach dem Auftreten des Rückehrereignisses zunächst die zweite Instanz 36 in einen Wartezustand versetzt. Hierzu wird der gerade in der zweiten Instanz 36 interpretierte Bytecode-Befehl vollständig abgearbeitet und dann der für eine spätere Rückkehr zur zweiten Instanz 36 erforderliche Kontext gesichert. Nun können im gemeinsam genutzten nativen Stapelspeicher 38 diejenigen Einträge, die zeitlich jünger als die von der ersten Instanz 34 angelegten Einträge sind, überschrieben oder durch *Return*-Befehle abgebaut werden.

Die erste Instanz 34 setzt dann die Ausführung des ersten Codepakets 30 mit demjenigen Inhalt des nativen Stapelspeichers 38 fort, der bestand, bevor die erste Instanz 34 in den Wartezustand versetzt wurde. Dies ist in Fig. 2A und 2B daran ersichtlich, dass der native Stapelspeicher 38 in den Zuständen Z1 und Z4 den gleichen Inhalt aufweist.

Der für die Rückkehr zur zweiten Instanz 36 erforderliche Kontext umfasst alle Informationen, die nach einem Wiederanlaufen der zweiten Instanz 36 benötigt werden, um die Ausführung des zweiten Codepakets 32 korrekt fortsetzen zu können. Dies sind insbesondere der Programmzähler und alle benötigten sonstigen Register der virtuellen Maschine. Es versteht sich, dass auch der Inhalt des von der zweiten Instanz 36 belegten Speichers (in Fig. 1 durch die strichpunktierte Linie angedeutet) unverändert erhalten bleiben muss. Insbesondere betrifft dies den Stapelspeicher 44 der virtuellen Maschine sowie einen gegebenenfalls angelegten Haldenspeicher (*Heap*).

Im hier beschriebenen Ausführungsbeispiel wird der für die Rückkehr zur zweiten Instanz 36 erforderliche Kontext in dem Stapelspeicher 44 der zweiten Instanz 36 gesichert. Dies bietet sich an, weil - wie gerade erwähnt - dieser Stapelspeicher 44 während des Wartezustands der zweiten Instanz 36 unverändert erhalten bleibt. Natürlich verändert auch die virtuelle Maschine in der zweiten Instanz 36 während ihres Wartezustands den ihr exklusiv zugeordneten Stapelspeicher 44 nicht.

Der somit erreichte Zustand ist in Fig. 2B als Zustand Z4 gezeigt. Die erste Instanz 34 kann nun die Ausführung des ersten Codepakets 30 fortsetzen und dabei die von ihr angelegten Einträge im nativen Stapelspeicher 38 beliebig löschen oder erweitern.

Eine Rückkehr zur zweiten Instanz 36 ist jederzeit möglich. Der Anlass für die Rückkehr kann beispielsweise sein, dass ein vorrangig zu bearbeitender Auftrag für die zweite Instanz 36 vorliegt oder dass die erste Instanz 34 auf eine APDU wartet. Ähnlich wie bereits beschrieben, wird dann die erste Instanz 34 in den Ruhezustand versetzt und die zweite Instanz 36 erneut gestartet. Der z.B. auf dem Stapelspeicher 44 gesicherte Kontext der zweiten Instanz 36 wird wiederhergestellt, so dass die zweite Instanz 36 die Ausführung des Programmcodes des zweiten Codepakets 32 bei dem nächsten anstehenden Befehl fortsetzen kann.

Zusammenfassend wird bei den hier beschriebenen Ausführungsbeispielen also die Tatsache genutzt, dass die Interpreterschleife der virtuellen Maschine - hier der JCVM - eine relativ einfache Struktur aufweist. Es wird nämlich in der zweiten Instanz 36 bei jedem Schleifendurchlauf ein Bytecode-Befehl des zweiten Codepakets 32 interpretiert. In den hier beschriebenen Ausführungsbeispielen wird der Interpreter während des Schleifendurchlaufs nicht unterbrochen. Vielmehr wird der Interpreter nur vor Beginn bzw. nach Ende eines Schleifendurchlaufs in den Wartezustand versetzt, wenn ein Rückkehrereignis aufgetreten ist. Dies hat den Vorteil, dass kein interner Kontext des Bytecode-Interpreters gesichert werden muss. Es reicht aus, lediglich Inhalte von virtuellen Registern und gegebenenfalls weiteren Kontext auf der Ebene der virtuellen Maschine zu sichern, wie dies oben beschrieben wurde.

Wenn das zweite Codepaket 32 lediglich zur Ausführung von *Servlets* dient, wird vor Beginn und nach Ende der Ausführung eines *Servlets* kein Platz im Stapelspeicher 44 benötigt. Daher ist es in Ausführungsalternativen möglich, den Stapelspeicher 44 je nach Bedarf dynamisch anzulegen. Natürlich muss hierbei sichergestellt werden, dass ein gegebenenfalls gesicherter Kontext während des Wartezustands der zweiten Instanz 36 erhalten bleibt. In den oben beschriebenen Ausführungsbeispielen werden jedoch die Stapelspeicher 40, 42, 44 auf der JCVM-Ebene statisch allokiert.

Allgemein kann der Aufruf der zweiten Instanz 36 während des Betriebs des Datenträgers 10 zu den verschiedensten Zeitpunkten erfolgen, da die zweite Instanz 36 beispielsweise in Reaktion auf den Eingang eines externen Auftrags gestartet wird. Es ist daher nicht oder nur eingeschränkt möglich, vorab eine Aussage über den im nativen Stapelspeicher 38 für die zweite Instanz 36 verfügbaren Speicherplatz zu machen. Insbesondere ist es denkbar, dass zum Zeitpunkt des Aufrufs der zweiten Instanz 36 der native Stapelspeicher 38 durch Einträge des Betriebssystems und/ oder der ersten Instanz 34 bereits weitgehend gefüllt ist und der noch freie Speicherplatz nicht für die virtuelle Maschine der zweiten Instanz 36 ausreicht.

Es ist daher in manchen Ausgestaltungen vorgesehen, im Zusammenhang mit dem Aufruf der zweiten Instanz 36 - also bei dem ersten Start und jeder Rückkehr zur zweiten Instanz 36 - zu überprüfen, ob ausreichend freier Platz im nativen Stapelspeicher 38 vorhanden ist. Wenn dies nicht der Fall ist, kann der Aufruf der zweiten Instanz 36 auf einen späteren Zeitpunkt - z.B. das nächste Auslöseereignis - verschoben werden. Alternativ oder zusätzlich kann der Test auch bei jedem Durchlauf der Interpreterschleife der zweiten Instanz 38 oder vor dem Aufruf nativer Methoden durchgeführt werden.

In manchen Ausführungsformen dient die Situation, dass der native Stapelspeicher 38 während der Programmausführung durch die zweite Instanz 36 voll oder annähernd voll ist, als Rückkehrereignis zur ersten Instanz 34. Hierbei wird in manchen Ausgestaltungen, ähnlich wie oben beschrieben, zunächst ein bereits begonnener Durchlauf der Interpreterschleife vollständig ausgeführt. Wenn dagegen kein vollständiger Durchlauf mehr möglich ist - z.B., weil nativer Code ausgeführt wird, der zusätzlichen Speicherplatz im nativen Stapelspeicher 38 benötigt -, so kann in manchen Ausgestaltungen ein spezielles Ausnahmeereignis (*Exception*) ausgelöst werden. Natürlich muss dann sichergestellt werden, dass der Programmzähler der virtuellen Maschine in der zweiten Instanz 36 nicht fortgeschaltet wird, damit nach der späteren Rückkehr zur zweiten Instanz 36 der native Code - z.B. eine native Methode - nicht erneut ausgeführt wird. Falls der native Code im Zuge seiner Ausführung den globalen Zustand ändert, muss dieser gegebenenfalls bei Auftreten des Ausnahmeereignisses zurückgerollt werden.

Es versteht sich, dass die hier beschriebenen Ausführungsformen und Ausführungsvarianten lediglich als Beispiele zu sehen sind. Weitere Abwandlungen und Kombinationen der hier beschriebenen Merkmale sind für den Fachmann unmittelbar ersichtlich.

## Patentansprüche

1. Verfahren zum Verwalten von mindestens zwei Instanzen (34, 36) einer virtuellen Maschine in einem tragbaren Datenträger (10), wobei für beide Instanzen (34, 36) der virtuellen Maschine ein einziger nativer Stapelspeicher (38) verwendet wird, mit den Schritten:
- Aufrufen und Ausführen einer ersten Instanz (34) der virtuellen Maschine unter Verwendung des nativen Stapelspeichers (38),
- Versetzen der ersten Instanz (34) in einen Wartezustand, wobei der Inhalt des nativen Stapelspeichers (38) unverändert belassen wird,
- Aufrufen und Ausführen einer zweien Instanz (36) der virtuellen Maschine, wobei allenfalls zusätzliche Speicherelemente des nativen Stapelspeichers (38) verwendet werden,
- Versetzen der zweiten Instanz (36) in einen Wartezustand, wobei der für eine spätere Rückkehr zum Ausführen der zweiten Instanz (36) erforderliche Kontext der zweiten Instanz (36) gesichert wird, und
- Rückkehr zum Ausführen der ersten Instanz (34) mit demjenigen Inhalt des nativen Stapelspeichers (38), der zum Zeitpunkt des Versetzens der ersten Instanz (34) in den Wartezustand bestand.

2. Verfahren nach Anspruch 1, **dadurch gekennzeichnet, dass** der gesicherte Kontext einen Programmzähler der zweiten Instanz (36) und/oder mindestens ein Register der zweiten Instanz (36) enthält.

3. Verfahren nach Anspruch 1 oder Anspruch 2, **dadurch gekennzeichnet, dass** der Kontext in einem der zweiten Instanz (36) exklusiv zugeordneten Stapelspeicher (44) gesichert wird.

4. Verfahren nach einem der Ansprüche 1 bis 3, **gekennzeichnet durch** die weiteren Schritte:
- erneutes Versetzen der ersten Instanz (34) in den Wartezustand, und
- Rückkehr zum Ausführen der zweiten Instanz (36), wobei der gesicherte Kontext wiederhergestellt wird.

5. Verfahren nach einem der Ansprüche 1 bis 4, **dadurch gekennzeichnet, dass** beim Versetzen der zweiten Instanz (36) in den Wartezustand und der Rückkehr zum Ausführen der ersten Instanz (34) Einträge im nativen Stapelspeicher (38), die von der zweiten Instanz (36) angelegt wurden, abgebaut oder verworfen werden.

6. Verfahren nach einem der Ansprüche 1 bis 5, **dadurch gekennzeichnet, dass** die virtuelle Maschine eine mehrfach durchlaufene Interpreterschleife aufweist, und dass ein bereits begonnener Durchlauf der Interpreterschleife in der virtuellen Maschine der zweiten Instanz (36) vor dem Versetzen der zweiten Instanz (36) in den Wartenzustand bis zum Ende des Durchlaufs fortgesetzt wird.

7. Verfahren nach einem der Ansprüche 1 bis 6, **dadurch gekennzeichnet, dass** die virtuelle Maschine in der ersten Instanz (34) ein erstes Codepaket (30) und in der zweiten Instanz (36) ein zweites Codepaket (32) ausführt, und dass eine bereits begonnene Ausführung eines Befehls des zweiten Codepakets (32) durch die zweite Instanz (36) vor dem Versetzen der zweiten Instanz (36) in den Wartenzustand vollständig abgearbeitet wird.

8. Verfahren nach einem der Ansprüche 1 bis 7, **dadurch gekennzeichnet, dass** im nativen Stapelspeicher (38) zumindest auch Rücksprungadressen gesichert werden.

9. Verfahren nach einem der Ansprüche 1 bis 8, **dadurch gekennzeichnet, dass** der Datenträger (10) eine erste und eine zweite Schnittstelle (16,18) aufweist.

10. Verfahren nach Anspruch 9, **dadurch gekennzeichnet, dass** die erste Schnittstelle (16) eine Schnittstelle gemäß ISO/IEC 7816 ist und die zweite Schnittstelle (18) eine USB-Schnittstelle ist.

11. Verfahren nach Anspruch 9 oder Anspruch 10, **dadurch gekennzeichnet, dass** die erste Instanz (34) im Zusammenhang mit der Verarbeitung von über die erste Schnittstelle (16) eingehenden Aufträgen verwendet wird, und dass die zweite Instanz (36) im Zusammenhang mit der Verarbeitung von über die zweite Schnittstelle (18) eingehenden Aufträgen verwendet wird.

12. Verfahren nach einem der Ansprüche 9 bis 11, **dadurch gekennzeichnet, dass** der Datenträger (10) über die erste Schnittstelle (14) ein SIM oder USIM bereitstellt, und dass der Datenträger (10) über die zweite Schnittstelle (14) einen Web-Server und/oder eine Zugriffsfunktion auf einen Speicherbereich des Datenträgers (10) bereitstellt.

13. Verfahren nach einem der Ansprüche 1 bis 12, **dadurch gekennzeichnet, dass** die virtuelle Maschine eine JCVM ist.

14. Computerprogrammprodukt mit Programmbefehlen, die dazu eingerichtet sind, einen Prozessor (12) eines tragbaren Datenträgers (10) zur Ausführung eines Verfahrens nach einem der Ansprüche 1 bis 13 zu veranlassen.

15. Tragbarer Datenträger (10), insbesondere Chipkarte oder Chipmodul, mit einem Prozessor (12) und mindestens einem Speicher (14), wobei der Datenträger (10) zur Ausführung eines Verfahrens nach einem der Ansprüche 1 bis 13 eingerichtet ist.
